# EUROPEAN PATENT SPECIFICATION

(11) **EP 2 094 437 B1**
(45) Date of publication and mention of the grant of the patent: **30.04.2014**
(21) Application number: 07835440.4
(22) Date of filing: 16.11.2007
(51) Int. Cl.: B23Q 1/54, B23Q 17/09, B23Q 3/00, G01L 5/00, G05B 19/401

(54) **METHOD AND DEVICE FOR THE COMPENSATION OF GEOMETRICAL ERRORS IN MACHINING MACHINERY**
VERFAHREN UND VORRICHTUNG FÜR DEN AUSGLEICH VON GEOMETRISCHEN FEHLERN IN BEARBEITUNGSMASCHINEN
PROCÉDÉ ET DISPOSITIF DE COMPENSATION D'ERREURS GÉOMÉTRIQUES POUR MACHINE À USINER

(30) Priority: 21.12.2006 SE 0602773
(43) Date of publication of application: 02.09.2009
(73) Proprietor: Hexagon Metrology AB, 131 26 Nacka Strand (SE)
(72) Inventor: PETTERSSON, Bo, London SW14 7DG (GB)
(74) Representative: Karlström, Lennart
(86) International application number: PCT/SE2007/050857
(87) International publication number: WO 2008/076054

(56) References cited:
- EP-A2- 0 150 313
- DE-A1- 4 413 442
- GB-A- 284 856
- JP-A- 09 076 135
- US-A- 4 879 913
- US-B1- 6 425 177

## Description

The present invention relates to a method for the compensation of geometrical errors that arise as a result of externally applied forces such as cutting forces from milling in processing machines, such as CNC machines. The invention concerns also an arrangement with which the forces can be measured and the errors in processing machines compensated.

It is possible to measure or calculate, or both, the geometrical errors that arise in a processing machine when the machine is subjected to the forces that arise during processing (cutting forces). The errors that arise are normally bending (due to limited stiffness) and possibly play. This means that the errors are both angular errors and displacements. The errors may also be a function of the position in the machine.

In order to compensate a processing machine for these deviations, it is possible to achieve this if the machine has at least five axes, and the applied forces are known, whereby the errors are fed into the system and the system takes into consideration and compensates for the errors that arise as a result of the forces applied. This can be carried out in at least one way, namely that the change that is to be applied is sent to the control system of the machine and changes in this manner the nominal pattern of movement. Most processing machines, however, not only those that are already in commercial use, but also most of those that are available for sale, have three axes, and compensation of angular errors is not possible for these, particularly if the errors change during the movement of the axes due to the tool mechanically taking up an erroneous angle relative to the workpiece.

From DE 44 13 442 Al is previously known a mounting platform that comprises means for measuring and storing the magnitude of forces, vibrations and torques acting on an object carried by the mounting platform. It is though only used for a subsequent quality control to be able to decide the cause of any deviations from the defined quality for the objects carried by the mounting platform. This mounting platform does not include any means for direct adjustment for obtaining a direct compensation of any errors detected during processing.

It is therefore one aim of the present invention to achieve a solution for the problems described above, such that also angular errors can be compensated for in three-axis processing machines.

The aim of the invention described above is achieved with a method in which a workpiece holder is provided with sensors that can measure the magnitudes and the directions of the forces that arise when processing is carried out, and wherein the workpiece holder is arranged such that it can be adjusted based on measurement signals that have been received.

The term "workpiece holder" is here used to denote either a unit that holds the workpiece directly (a vice or similar) or a worktable that holds the workpiece indirectly.

It is preferable that the workpiece holder is arranged such that it can be turned around at least one axis relative to a fixture in the processing machine to which it is attached.

A further aim of the invention is to achieve a workpiece holder that allows the compensation of at least angular errors in a processing machine.

This further aim of the invention is achieved with a workpiece holder according to the invention, which workpiece holder can be angularly adjusted relative to a fixture in the processing machine to which the workpiece holder is attached based on measurement signals that have been received. According to one preferred embodiment, the workpiece holder is attached to the fixture with the aid of adjustable rods that can be compressed or extended, which means that the workpiece holder can be both displaced and oriented at freely chosen values relative to the base.

The invention will now be described in more detail in the form of a pair of embodiments, illustrated with the aid of the attached drawings, in which **Figs. 1A** and **1B** show schematically the principle for an adjustment means for rotation around two axes, namely in a frontal view in **Fig. 1A** and in a side view in **Fig. 1B** that is rotated 90° relative to Fig. 1A, **Fig. 2** shows a first embodiment of a workpiece holder according to the invention, and **Fig. 3** shows a second embodiment of a workpiece holder according to the invention.

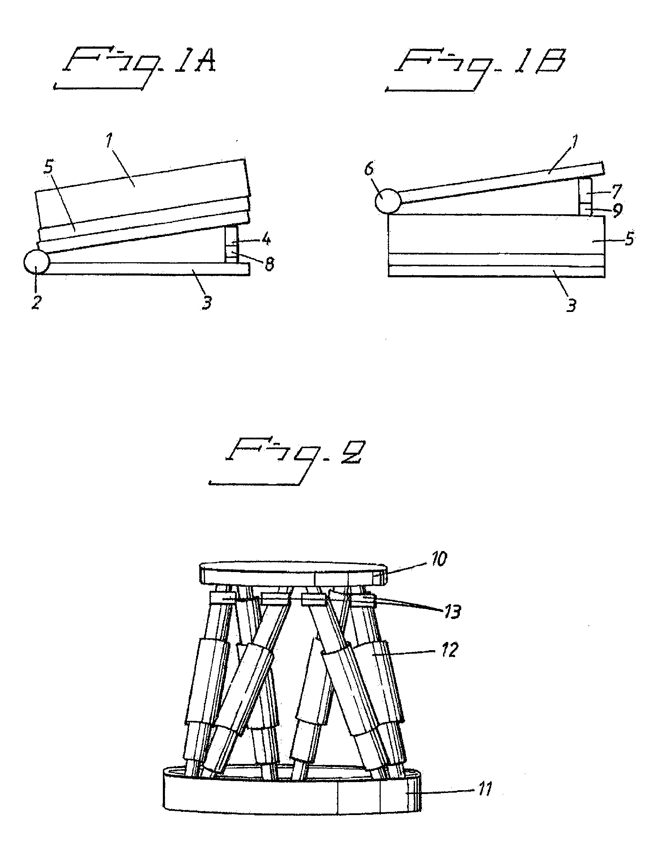

The surface normal of a workpiece holder 1 can, according to Fig. 1A, take up a freely chosen angle relative to a fixture 3 by rotation around an axis 2, and this is achieved by changing the lengths of the actuator 4. The surface normal of the workpiece holder 1 can in an equivalent manner, according to Fig. 1B, with the aid of a further plate 5 and through rotation around a further axle 6, which is perpendicular to the axis 2, take up a freely chosen angle relative to the fixture 3 by changing the length of a further actuator 7. The force that is acting on the actuators 4 and 7 can be measured by providing each one of the actuators 4 and 7 with a sensor 8 and 9, respectively.

The force can also be measured, of course, by providing the rotation joints with a sensor that measures the torque. All three types of torque can be measured and compensated for by placing the complete package onto a round table and furthermore providing the round table with a sensor located in the direction of rotation. The round table can be placed onto a freely chosen plate (1, 3 or 5). Furthermore, by introducing force sensors between the bottom plate 3 or in it, the forces in the x, y and z directions can be measured and compensated for.

Fig. 2 shows an example of how such an arrangement can be designed in practice, without requiring any additional plate or two pivot joints placed perpendicularly. A workpiece holder 10 in this case is connected to a fixture 11 with the aid of six rods 12 that can be compressed and extended. The rods 12 that can be compressed and extended are arranged such that neighbouring rods are tilted in opposite directions. The rods 12 that can be compressed and extended can be manoeuvred by electrical, hydraulic or pneumatic means, such that each rod can be adjusted independently of the other rods. The rods that can be compressed and extended also comprise a sensor 13 that can measure the force in the direction of the relevant rod.

The rods 12 that can be compressed and extended thus function, according to the preferred embodiment, both as pivot joint and as actuator in the principle for compensation according to the invention described above.

It is possible to calculate the magnitude and the direction of the force to which the system is exposed by combining the forces in the various rods that can be compressed and extended. This is achieved by measuring the difference between the values during processing and during non-processing, making it possible to calibrate such that the weight of the workpiece is removed.

It is thus possible to achieve a freely chosen angular setting by manoeuvring the rods 12 that can be compressed and extended in different ways. It is possible in this case to achieve also displacement of the workpiece holder 10 relative to the attachment 11.

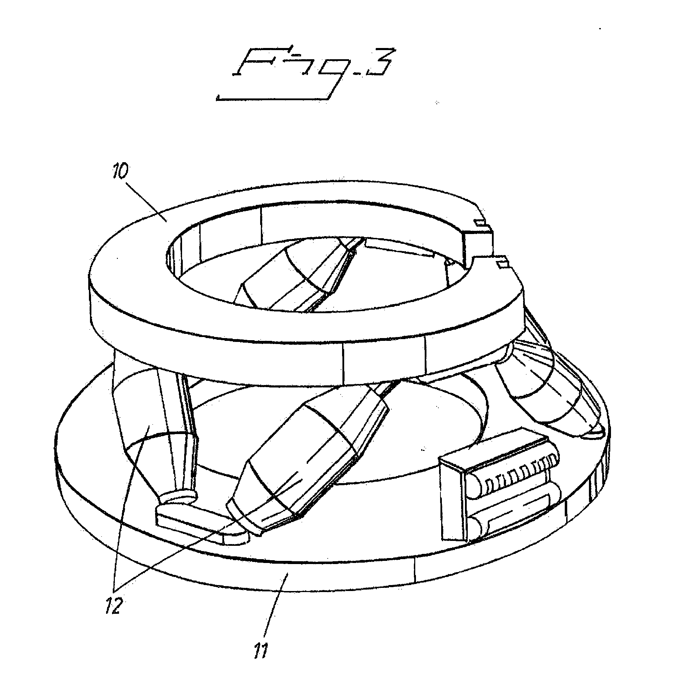

Fig. 3 shows a further example of a workpiece holder 10 according to the invention, which is, as is the one in Fig. 2, attached to a fixture 11 with the aid of six rods 12 that can be compressed and extended. This fixture 11 may be the part that is attached to the processing machine. The rods 12 that can be compressed and extended are provided with force sensors 13, as they are in Fig. 2.

The arrangement of rods 12 that can be compressed and extended that has been described above can achieve a displacement and a rotation of the workpiece holder relative to the fixture such that all angular errors can be compensated for.

The workpiece holder may be any suitable means for holding a workpiece, such as, for example, a table, a vice or a chuck.

## Claims

1. A method for the compensation of geometrical errors that arise as a result of externally applied forces such as cutting forces in processing machines, wherein a workpiece holder (1, 10), the angle of which can be adjusted relative to a fixture (3, 11), is arranged such that it can measure the magnitudes and directions of the applied forces that arise in a processing machine when processing is being carried out, relative to the fixture (3, 11) in the processing machine to which the workpiece holder is attached, wherein the workpiece holder (1, 10) is arranged such that it can be adjusted on the basis of measurement signals that have been received from force measurement means of the workpiece holder.

2. The method according to claim 1, **characteri**s e d in that the workpiece holder is arranged such that it can be rotated around at least two axes (2, 6), essentially perpendicular to each other.

3. An arrangement with which applied forces and the geometrical errors in processing machines that arise from these forces can be compensated, wherein the arrangement comprises a workpiece holder (1, 10) the angle of which can be adjusted relative to a fixture (3, 11) in the processing machine to which the workpiece holder is attached, and in that force measurement means (8, 9, 13) are arranged to measure the forces that are exerted on the workpiece holder (1, 10), wherein the workpiece holder (1, 10) is arranged such that it can be adjusted on the basis of measurement signals that have been received from the force measurement means of the workpiece holder.

4. The arrangement according to claim 3, **charac**- **terised** in that the workpiece holder (10) is attached to the fixture (11) with the aid of adjustable rods (12) that can be compressed and extended and in that force measurement means (13) are arranged for the measurement of the force in each rod (12).

5. The arrangement according to claim 4, **charac**- **terised** in that the workpiece holder (10) is attached to the fixture (11) with the aid of six independently adjustable rods (12) that can be compressed and extended and in that force measurement means (13) are arranged for the measurement of the force in each rod (12) that can be compressed and extended.

6. The arrangement according to claim 4 or 5, **charac**- **terised** in that neighbouring rods (12) that can be compressed and extended are arranged such that they tilt in opposite directions.

## Patentansprüche

1. Verfahren zum Ausgleich von geometrischen Fehlern, die durch von außen einwirkende Kräfte, wie z.B. Schneidekräfte, in Bearbeitungsmaschinen entstehen, wobei ein Werkstückhalter (1, 10), dessen Winkel relativ zu einem Befestigungsorgan (3, 11) eingestellt werden kann, derart angeordnet ist, dass er die Größen und Richtungen der einwirkenden Kräfte messen kann, die in einer Bearbeitungsmaschine bei der Durchführung einer Bearbeitung auftreten, und zwar relativ zum Befestigungsorgan (3, 11) in der Bearbeitungsmaschine, an dem der Werkstückhalter befestigt ist, wobei der Werkstückhalter (1, 10) derart angeordnet ist, dass er auf der Basis von Messsignalen eingestellt werden kann, die von Kraftmessungsmitteln des Werkstückhalters empfangen wurden.

2. Verfahren nach Anspruch 1, **dadurch gekennzeichnet, dass** der Werkstückhalter derart angeordnet ist, dass er um wenigstens zwei Achsen (2, 6) gedreht werden kann, die im Wesentlichen senkrecht zueinander sind.

3. Anordnung, mit der einwirkende Kräfte und die geometrischen Fehler in Bearbeitungsmaschinen, die durch diese Kräfte entstehen, ausgeglichen werden können, wobei die Anordnung einen Werkstückhalter (1, 10) umfasst, dessen Winkel relativ zu einem Befestigungsorgan (3, 11) in der Bearbeitungsmaschine, an dem der Werkstückhalter befestigt ist, eingestellt werden kann, und wobei Kraftmessungsmittel (8, 9, 13) angeordnet sind, um die Kräfte zu messen, die auf den Werkstückhalter (1, 10) ausgeübt werden, wobei der Werkstückhalter (1, 10) derart angeordnet ist, dass er auf der Basis von Messsignalen eingestellt werden kann, die von den Kraftmessungsmitteln des Werkstückhalters empfangen wurden.

4. Anordnung nach Anspruch 3, **dadurch gekennzeichnet, dass** der Werkstückhalter (10) am Befestigungsorgan (11) mit Hilfe von einstellbaren Stangen (12) befestigt ist, die komprimiert und auseinandergezogen werden können, und dass Kraftmessungsmittel (13) zur Messung der Kraft in jeder Stange (12) angeordnet sind.

5. Anordnung nach Anspruch 4, **dadurch gekennzeichnet, dass** der Werkstückhalter (10) am Befestigungsorgan (11) mit Hilfe von sechs unabhängig einstellbaren Stangen (12) befestigt ist, die komprimiert und auseinandergezogen werden können, und dass Kraftmessungsmittel (13) zur Messung der Kraft in jeder Stange (12) angeordnet sind, die komprimiert und auseinandergezogen werden kann.

6. Anordnung nach Anspruch 4 oder 5, **dadurch gekennzeichnet, dass** benachbarte Stangen (12), die komprimiert und auseinandergezogen werden können, derart angeordnet sind, dass sie in entgegengesetzte Richtungen geneigt sind.

## Revendications

1. Procédé de compensation d'erreurs géométriques qui sont développées de par l'application de forces extérieures telles que des efforts de coupe dans des machines à usiner, dans lequel un support (1, 10) de pièce à usiner, dont l'angle peut être réglé par rapport à une platine (3, 11), est agencé de manière à pouvoir mesurer des amplitudes et des directions des forces appliquées qui sont développées en service dans une machine à usiner au cours de l'usinage, par rapport à la platine (3, 11) dans la machine à usiner auquel le support de pièces à usiner est fixé, dans lequel le support (1, 10) de pièce à usiner est agencé de manière à pouvoir être réglé à partir des signaux de mesure qui ont été reçus de moyens de mesure des forces du support de pièce à usiner.

2. Procédé selon la revendication 1, **caractérisé en ce que** le support de pièce à usiner est agencé de manière à pouvoir tourner autour d'au moins deux axes (2, 6), essentiellement perpendiculaires l'un par rapport à l'autre.

3. Dispositif avec lequel des forces appliquées et des erreurs géométriques qui sont développées dans des machines à usiner de par ces forces peuvent être compensées, dans lequel le dispositif comprend un support (1, 10) de pièce à usiner dont l'angle peut être réglé par rapport à une platine (3, 11) dans la machine à usiner auquel le support de pièce à usiner est fixé, et en ce que des moyens (8, 9, 13) de mesure des forces sont agencés pour mesurer les forces qui s'exercent sur le support (1, 10) de pièce à usiner, dans lequel le support (1, 10) de pièce à usiner est agencé de manière à pouvoir être réglé en se basant sur les signaux de mesure qui ont été reçus des moyens de mesure des forces du support de pièce à usiner.

4. Dispositif selon la revendication 3, **caractérisé en ce que** le support (10) de pièce à usiner est fixé à la platine (11) à l'aide de tiges (12) réglables qui peuvent être rétractées et déployées et **en ce que** les moyens de mesure des forces (13) sont agencés pour mesurer la force dans chaque tige (12).

5. Dispositif selon la revendication 4, **caractérisé en ce que** le support (10) de pièce à usiner est fixé sur la platine (11) à l'aide de six tiges (12) réglables indépendamment l'une de l'autre qui peuvent être rétractées et déployées et **en ce que** les moyens de mesure des forces (13) sont conçus pour mesurer la force dans chaque tige (12) qui peut être rétractée et déployée.

6. Dispositif selon la revendication 4 ou 5, **caractérisé en ce que** des tiges adjacentes (12) qui peuvent être rétractées et déployées sont conçues de manière à pouvoir basculer dans des directions opposées.
